# EUROPEAN PATENT APPLICATION

(11) **EP 4 783 095 A1**
(43) Date of publication of application: **29.07.2026**
(21) Application number: 24876666.9
(22) Date of filing: 12.10.2024
(51) Int. Cl.: G06Q 20/32

(54) **PAYMENT METHOD, APPARATUS, AND DEVICE**

(30) Priority: 12.10.2023 CN 202311323494
(71) Applicant: ALIPAY PAYMENT TECHNOLOGY CO., LTD., Shanghai 200120 (CN)
(72) Inventor: LI, Junji, Hangzhou, Zhejiang 310000 (CN)
(74) Representative: Winter, Brandl - Partnerschaft mbB
(86) International application number: PCT/CN2024/124342
(87) International publication number: WO 2025/077861

(57) **Abstract**

Embodiments of the present description are applied to smart wearable devices. Disclosed are a payment method, apparatus, and device. The solution comprises: generating a payment code by means of a client of a payment application running in a main control chip, wherein the payment application is a predetermined official application or an officially partnered application of a smart wearable device; writing the payment code into an NFC chip by means of direct interaction between the master control chip and the NFC chip, so that when the smart wearable device is close to a POS machine, the POS machine reads the payment code in the NFC chip and initiates payment to a server of the payment application on the basis of the payment code; receiving a payment result written into the NFC chip by the POS machine after payment processing is completed; and reading the payment result to the main control chip by means of direct interaction between the master control chip and the NFC chip, so that the smart wearable device obtains the payment result.

## Description

### TECHNICAL FIELD

This specification relates to the field of electronic payment technologies, and in particular, to a payment method, apparatus, and device.

### BACKGROUND

With the development of electronic payment technologies and the use and popularization of smartphones, payment based on quick response codes has become one of main payment means of micropayment in people's daily life, and brings great convenience to both a payer and a payee.

Currently, there are mainly two specific user operation manners for payment based on quick response codes. An example in which a user is used as a payer and a merchant is used as a payee is used. A first manner is: A user generates and presents a payer code on a smartphone of the user, and a merchant scans the payer code by using a code scanning machine such as a code scanning gun, to implement payment. A second manner is: A merchant presents (electronically presents or physically presents) a payee code of the merchant, and a user scans the payee code by using a camera of a smartphone of the user, to implement payment.

If payment based on quick response codes is popularized, due to being affected by the fact that a corresponding payment medium of a user is mainly a mobile phone currently, an overall payment moving line is relatively long, and operations by the user are still relatively complex. From the perspective of the operations alone, the operations are even not as convenient as using a physical card at many times. Moreover, in an active scanning manner of the user, if a payment terminal used by the user needs to have a camera, the user substantially can only use the mobile phone. Certainly, physical card payment also has obvious disadvantages such as high hardware costs and easy loss.

Based on this, a payment solution that is more conducive to improving user operation experience and that is capable of relatively well controlling costs is needed.

### SUMMARY

One or more embodiments of this specification provide a payment method, apparatus, and device, and a storage medium, to resolve the following technical problem: A payment solution that is more conducive to improving user operation experience and that is capable of relatively well controlling costs is needed.

To resolve the foregoing technical problem, the one or more embodiments of this specification are implemented as follows:

A payment method provided in the one or more embodiments of this specification is applied to a smart wearable device, the method including:
generating a payer code through a client of a payment application running in a main control chip, where the payment application is a predetermined official application or official partner application of the smart wearable device;
writing, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
receiving a payment result written into the NFC chip by the cash register after processing of the payment is completed; and
reading the payment result to the main control chip through the direct interaction between the main control chip and the NFC chip, to enable the smart wearable device to obtain the payment result.

A payment apparatus provided in the one or more embodiments of this specification is applied to a smart wearable device, the apparatus including:
a payer code generating module, configured to generate a payer code through a client of a payment application running in a main control chip, where the payment application is a predetermined official application or official partner application of the smart wearable device;
a direct interaction writing module, configured to write, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
a payment result receiving module, configured to receive a payment result written into the NFC chip by the cash register after processing of the payment is completed; and
a payment result reading module, configured to read the payment result to the main control chip through the direct interaction between the main control chip and the NFC chip, to enable the smart wearable device to obtain the payment result.

A payment device provided in the one or more embodiments of this specification is applied to a smart wearable device, the device including:
at least one processor; and
a memory communicatively connected with the at least one processor, where
the memory stores instructions executable by the at least one processor, and the instructions are executed by the at least one processor, to enable the at least one processor to perform:
   generating a payer code through a client of a payment application running in a main control chip, where the payment application is a predetermined official application or official partner application of the smart wearable device;
   writing, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
   receiving a payment result written into the NFC chip by the cash register after processing of the payment is completed; and
   reading the payment result to the main control chip through the direct interaction between the main control chip and the NFC chip, to enable the smart wearable device to obtain the payment result.

A non-volatile computer storage medium provided in the one or more embodiments of this specification is applied to a smart wearable device, where the medium stores computer-executable instructions, and the computer-executable instructions are configured to perform:
generating a payer code through a client of a payment application running in a main control chip, where the payment application is a predetermined official application or official partner application of the smart wearable device;
writing, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
receiving a payment result written into the NFC chip by the cash register after processing of the payment is completed; and
reading the payment result to the main control chip through the direct interaction between the main control chip and the NFC chip, to enable the smart wearable device to obtain the payment result.

The at least one technical solution used in the one or more embodiments of this specification can achieve the following beneficial effects: Convenient payment can be performed in a tap-to-pay manner instead of a mobile phone based on a smart wearable device such as a smart watch, a payment moving line is short, and an operation by a user is simple. Moreover, a problem that a main control chip cannot directly interact with an NFC chip in a card simulation solution is further resolved, so that the main control chip cannot directly interact with the NFC chip, flexibility is high, hardware and development costs are low, and a payment result can be further obtained without a network, to make it convenient for the user to perceive the payment result.

### BRIEF DESCRIPTION OF DRAWINGS

To describe the embodiments of this specification or the technical solutions in the prior art more clearly, the following briefly describes the accompanying drawings required for describing the embodiments or the prior art. Clearly, the accompanying drawings in the following description are merely some embodiments described in this specification. A person of ordinary skill in the art may further obtain other accompanying drawings according to these accompanying drawings without creative efforts.
FIG. 1 is a schematic flowchart of a payment method according to one or more embodiments of this specification.
FIG. 2 is a schematic diagram of an application scenario of the method in FIG. 1 according to one or more embodiments of this specification.
FIG. 3 is a schematic diagram of a principle of a direct interaction mode according to one or more embodiments of this specification.
FIG. 4 is a schematic diagram of a principle of an indirect interaction mode according to one or more embodiments of this specification.
FIG. 5 is a schematic diagram of a payment architecture in an application scenario according to one or more embodiments of this specification.
FIG. 6 is a schematic diagram of a payment procedure under the payment architecture in FIG. 5 according to one or more embodiments of this specification.
FIG. 7 is a schematic flowchart of an active control solution for an online state according to one or more embodiments of this specification.
FIG. 8 is a schematic flowchart of a segmented payment solution based on user payment willingness detection according to one or more embodiments of this specification.
FIG. 9 is a schematic structural diagram of a payment apparatus according to one or more embodiments of this specification.
FIG. 10 is a schematic structural diagram of a payment device according to one or more embodiments of this specification.

### DETAILED DESCRIPTION

Embodiments of this specification provide a payment method, apparatus, and device, and a storage medium.

To enable a person skilled in the art to better understand the technical solutions in this specification, the following clearly and completely describes the technical solutions in the embodiments of this specification with reference to the accompanying drawings in the embodiments of this specification. Clearly, the described embodiments are merely some but not all of the embodiments of this application. All other embodiments obtained by a person of ordinary skill in the art based on the embodiments of this specification without making creative efforts shall fall within the protection scope of this application.

To resolve the problem in the background, this application considers using a smart wearable device that is more portable than a smartphone, and implementing interaction of a payer code based on dynamic reading and writing of Near Field Communication (NFC), to implement payment, and a camera is not needed to support code scanning. For a user, using a smart watch as an example, payment can be implemented only by raising a hand to bring the worn watch to approach a cash register. Operations are very easy, and experience is relatively good. It should be noted that based on such a thought, the applicant initially attempts an NFC-based card simulation payment solution. However, development costs of the card simulation manner are high, a main control chip (which may mainly refer to a Microcontroller Unit, MCU in a scenario of this application) cannot directly interact with an NFC chip, flexibility is poor, and a payment result needs to be additionally obtained by the main control chip from a server. Based on this, the solutions provided in this application resolve all of these problems. The following continues to describe the solutions of this application in detail.

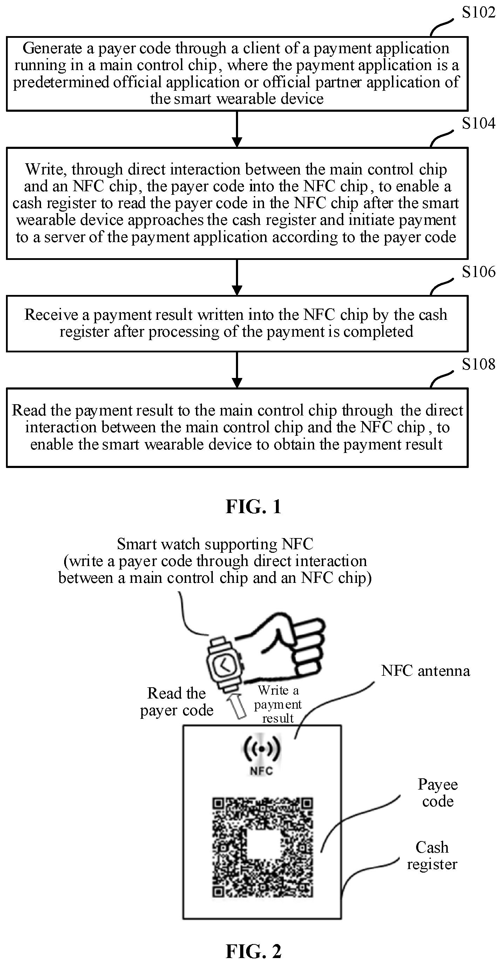

FIG. 1 is a schematic flowchart of a payment method according to one or more embodiments of this specification. The method may be applied to a smart wearable device such as a smart watch, a smart band, or a smart ring. Advantages of this solution can be particularly embodied if the method is applied to a smart wearable device that does not have a camera supporting code scanning. For ease of description, some of the following embodiments are mainly described by using a smart watch as an example.

The procedure in FIG. 1 includes the following steps S102 to S108.

S102: Generate a payer code through a client of a payment application running in a main control chip, where the payment application is a predetermined official application or official partner application of the smart wearable device.

In one or more embodiments of this specification, the smart wearable device includes a main control chip and an NFC chip, and dynamic reading and writing of corresponding data are performed in a payment process based on the NFC chip by using a dynamic label. The payer code may be generated in advance or generated in real time when payment is triggered. Under support of a related capability (for example, pre-verifying an amount of a user account or pre-authorizing payment) of a client of a payment application, if needed, the smart wearable device in an offline state can generate the payer code, and subsequently interacts with a server of the payment application after being in an online state. A payer code, for example, is used as a code value of a deduction authorization credential or a payer quick response code itself. Because the code value has a smaller data volume, and is more convenient to be used in NFC communication, a corresponding code value may be used as a generated payer code.

In one or more embodiments of this specification, when a card simulation solution mainly applicable to a smartphone is used, because there are a plurality of uncertain third-party applications to access the smartphone, to ensure reliability of the applications and access security, a security module needs to be constructed in an NFC chip, and reliability of the applications and access security are ensured by using a series of procedures. In such a solution, a main control chip of a payment device cannot directly interact with the NFC chip, and costs are very high. However, in this application, each payment application to be used may be predetermined before the smart wearable device comes into the market, and is a trusted application such as an official application or an official partner application. On such a basis, direct interaction between the main control chip and the NFC chip during payment is implemented, so that efficiency, security, and flexibility can all be ensured.

Using a Real Time Operating System (RTOS) smart watch as an example, an application (that is, an official application) of a manufacturer of the smart watch and a small quantity of cooperative large platform applications are substantially used. In terms of payment, a large platform payment application with quite strong popularity is usually predetermined as an official partner application, and a large quantity of low-certainty third-party applications are not involved. Therefore, compared with a smartphone, security controllability is relatively good, and an application scenario is relatively reliable.

For a smart wearable device, a client of a payment application used may be more lightweight, and some functions that are not very important in this scenario, for example, some Software Development Kits (SDK) in a client used by a mobile phone may be removed, to improve a processing speed and reduce a burden on the device.

S104: Write, through direct interaction between the main control chip and an NFC chip, the payer code into the NFC chip, to enable a cash register to read the payer code in the NFC chip after the smart wearable device approaches the cash register and initiate payment to a server of the payment application according to the payer code.

In one or more embodiments of this specification, based on control of dependability of the payment application and controllability of an application scenario of a smart wearable device, the main control chip and the NFC chip may directly interact with each other by using a predetermined interaction protocol through an IIC physical medium. Therefore, there is no need to additionally perform development on the NFC chip, and programs related to the payment application may all run on the main control chip without being extended to the NFC chip. Therefore, development costs are low, maintenance is convenient, and different platforms may maintain only one piece of code.

In one or more embodiments of this specification, after a smart wearable device approaches a cash register to some extent (for example, enters a communication range of an NFC antenna of a cash register), the smart wearable device has the capability of triggering a payment procedure. If the user is given sufficient initiative, a trigger gesture or a trigger shortcut key may be preset for a smart wearable device, and a payment procedure is triggered only after the user executes the trigger gesture or operates the trigger shortcut key, to prevent the user from inadvertently approaching a cash register to trigger the payment procedure accidentally.

However, this manner is still slightly complex because additional operations by the user are required. Therefore, the solution of this application further optimizes the manner, that is, the user causes the smart wearable device to approach the cash register, so that the payment willingness of the user can be automatically detected. In addition, by improving a subsequent payment procedure, a pre-payment phase is added, so that the detection process does not delay efficiency of payment processing performed if the user has the payment willingness. Therefore, both security and efficiency are considered. This part of optimization is described in detail below.

In one or more embodiments of this specification, compared with a static label manner, the dynamic label manner used for the NFC chip is more flexible and has the capability of obtaining a payment result offline, and the smart wearable device does not need to interact with the server of the payment application. The label may be an area that is in the NFC chip and that is used for writing data. In the static label manner, data is written in advance, does not change in a payment process, and is only read and used. However, in the dynamic label manner, data may be modified by the chip in a program running process.

The cash register reads the payer code of the current user from the NFC chip of the smart wearable device based on the NFC communication capability of the cash register, to request, by using the payer code as a credential for authorizing deduction, the server of the payment application to perform corresponding deduction to an account of the user. The server performs verification based on the payer code and performs a corresponding payment processing procedure, to complete the deduction, and may further remit to the payee in real time or in a delayed time (for example, periodically settles with a payee such as a merchant). After the payment processing is completed, the server returns a payment result to the cash register.

In one or more embodiments of this specification, to improve security, the generated payer code has a validity period. Based on the dynamic label manner, the payer code can be updated in the NFC chip timelier. Specifically, for example, during payer code generation, a payer code having a specified validity period (for example, several minutes) is generated. After the payer code is written into the NFC chip, a payer code that does not expire is regenerated, in response to determining that the validity period of the payer code has expired, and the payer code that does not expire is written into the NFC chip through the direct interaction between the main control chip and the NFC chip, to replace the expired payer code for the payment.

S106: Receive a payment result written into the NFC chip by the cash register after processing of the payment is completed.

In one or more embodiments of this specification, because the cash register writes the payment result into the NFC chip based on NFC communication, the smart wearable device can still receive the payment result written into the NFC chip even if the smart wearable device is in the offline state.

S108: Read the payment result to the main control chip through the direct interaction between the main control chip and the NFC chip, to enable the smart wearable device to obtain the payment result.

Because the main control chip and the NFC chip directly interact with each other in the smart wearable device, even if the smart wearable device is in the offline state, the main control chip is not prevented from further reading the payment result. Further, the smart wearable device may notify the user of the payment result, thereby resolving a problem that it may be difficult for the user to instantly perceive the payment result during physical card payment. For a smart wearable device having a screen, such as a smart watch, a payment result may be presented to a user on the screen. For some other smart wearable devices that do not have a screen, a payment result may be notified to a user in another manner such as vibration or voice broadcast.

According to the method of FIG. 1, convenient payment can be performed in a tap-to-pay manner instead of a mobile phone based on a smart wearable device such as a smart watch, a payment moving line is short, and an operation by a user is simple. Moreover, a problem that a main control chip cannot directly interact with an NFC chip in a card simulation solution is further resolved, so that the main control chip cannot directly interact with the NFC chip, flexibility is high, hardware and development costs are low, and a payment result can be further obtained without a network, to make it convenient for the user to perceive the payment result.

Based on the method of FIG. 1, this specification further provides some specific implementation solutions and extension solutions of the method, which are further described below.

According to the foregoing descriptions, one or more embodiments of this specification provide a schematic diagram of an application scenario of the method in FIG. 1, referring to FIG. 2.

In the scenario in FIG. 2, a cash register supports both code scanning payment and NFC payment. For a user intending to perform code scanning payment, a mobile terminal such as a smartphone having a camera with a code scanning function may be used to scan a payee code presented by the cash register. Further, after the user inputs a payment amount, payment is initiated from the mobile terminal to a server of a payment application. For a user intending to perform NFC payment, for example, a smart watch supporting NFC is used. The smart watch is caused to approach an NFC antenna of the cash register. A main control chip of the smart watch generates a payer code, and writes the payer code into an NFC chip through direct interaction with the NFC chip of the smart watch. The NFC antenna of the cash register reads the payer code in the NFC chip, and payment is initiated to a server of a payment application based on the payer code. After the payment is completed, a payment result fed back by the server is written back to the NFC chip.

In one or more embodiments of this specification, the NFC chip includes an NFC controller and a security module that are connected to each other. The security module, for example, may be configured to support non-direct interaction (for example, referred to as indirect interaction) between the main control chip and the NFC chip. Whether the security module has an assist applet may be determined, in response to the direct interaction being unsuccessful, where the assist applet may be an applet of the foregoing payment application or an applet of another payment assist application (for example, another payment application that is not trusted enough). In response to the security module having the assist applet, the assist applet is called by using the main control chip, to indirectly interact with the NFC chip.

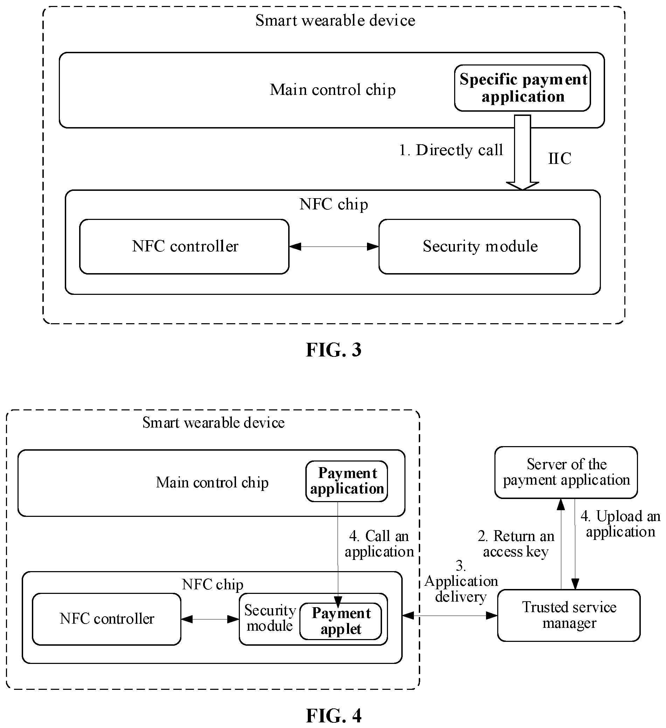

More visually, one or more embodiments of this specification provide schematic diagrams of principles of a direct interaction mode and an indirect interaction mode, referring to FIG. 3 and FIG. 4.

FIG. 3 shows the principle of the direct interaction mode. In this mode, a payment application needs to be a specific payment application, and is a trusted application that a smart wearable device determines in advance, and in particular, an official application or an official partner application that is already determined at delivery. Then, a main control chip may directly call an NFC chip through IIC by running the particular payment application, to implement direct interaction, for example, perform data reading and writing based on an NFC data exchange format. The NFC chip does not need to run a program of the particular payment application.

FIG. 4 shows the principle of the indirect interaction mode. In this mode, any payment application whose running is supported by the platform may be used, and the NFC chip on the smart wearable device or even more parts cannot sufficiently trust these payment applications. Therefore, a trusted service manager (generally, a third party other than the smart wearable device and the payment application) needs to intervene. Specifically, for example, the server of the payment application uploads a program (such as a client of the payment application or an assist applet) of the payment application and provides the program to the trusted service manager. After performing corresponding examination and management, the trusted service manager may correspondingly return an access key to the server if appropriate, and may deliver the program of the payment application to the smart wearable device. For example, a client of the payment application runs in a main control chip of the smart wearable device, and an assist applet may be located in a security module of the NFC chip. The server also provides the access key to the smart wearable device, and the main control chip may call the assist applet in the security module by using the access key through the client of the payment application, to implement indirect interaction between the main control chip and the NFC chip.

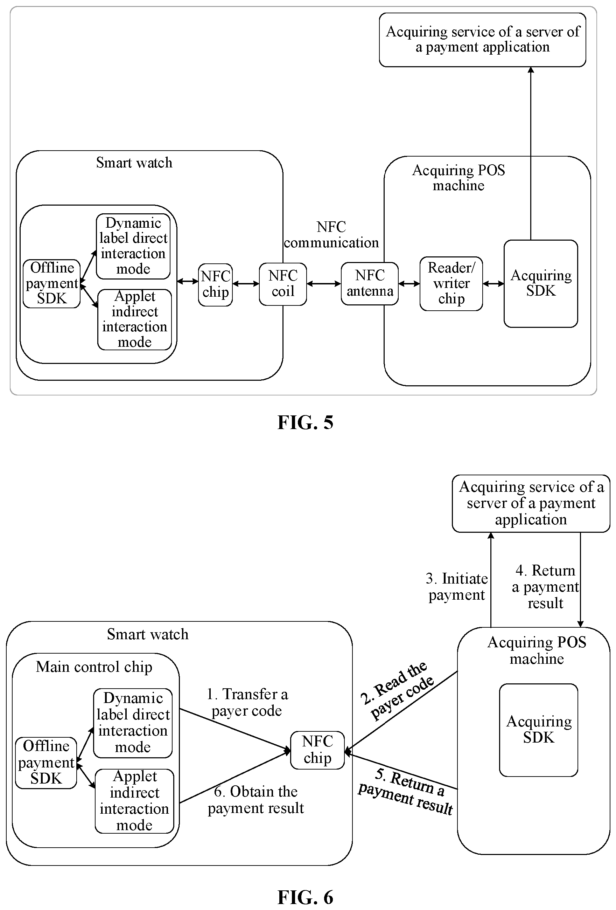

According to the foregoing descriptions, one or more embodiments of this specification provide a schematic diagram of a payment architecture in an application scenario, and a schematic diagram of a payment procedure in the payment architecture, referring to FIG. 5 and FIG. 6.

FIG. 5 shows the payment architecture, and the application scenario involves a smart watch as a payment end, an acquiring POS machine as an acquiring end, and an acquiring service provided by a server of a payment application.

A module supporting NFC communication is deployed on each of the smart watch and the acquiring POS machine. The smart watch has an NFC chip and an NFC coil for sensing. The acquiring POS machine has a corresponding NFC antenna and NFC reader/writer chip. A main control chip of the smart watch also has an NFC read/write function, and the read/write function may also be built in the NFC chip. An offline payment SDK provided by the payment application is deployed and run on the smart watch, and an acquiring SDK provided by the payment application is deployed and run on the acquiring POS machine.

For interaction between the main control chip and the NFC chip, the smart watch supports both the dynamic label direct interaction mode and the applet indirect interaction mode, and the dynamic label direct interaction mode may be preferentially used.

FIG. 6 shows a payment procedure in the payment architecture (where an NFC communication module is partially omitted). A user can implement, based on NFC communication by using a predetermined gesture or shortcut key without invoking a payment application to the foreground, tap-to-pay between a smart watch and an acquiring POS machine.

In the payment procedure, the user triggers, by using a predetermined gesture or pressing a shortcut key, to prepare for payment, and then causes the smart watch to approach the acquiring POS machine, to complete payment, and the watch can obtain a payment result without a network. In this process, in the smart watch, the main control chip transfers the payer code to the NFC chip in advance or after payment is prepared. When the smart watch sufficiently approaches the acquiring POS machine, the acquiring POS machine reads the payer code by using the NFC antenna, initiates payment to an acquiring service, obtains a payment result returned after corresponding processing of the acquiring service, and then returns the payment result by using the NFC antenna and writes the payment result into the NFC chip.

The entire process can ensure that payment is actively initiated by the user, and the identity of the user can be verified free of perception, to ensure that the smart watch is currently used by the user to perform payment, rather than being used by someone else without authorization, which resolves a pain point that an offline smart watch cannot obtain a payment result. The entire process is quick and secure.

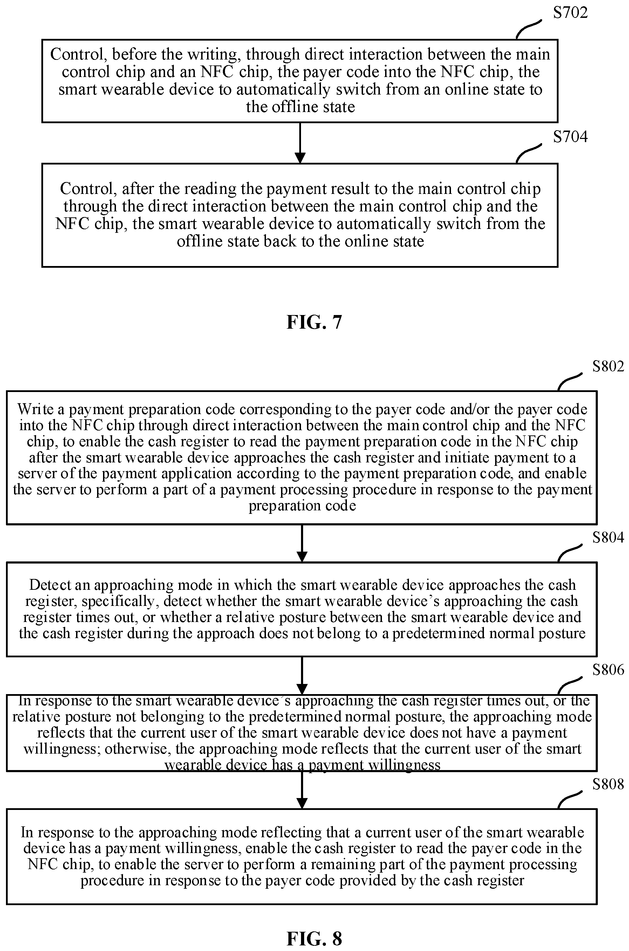

In one or more embodiments of this specification, compared with a smartphone, a quantity and types of applications run on a smart wearable device are far less, and a keep-alive requirement of the applications is lower (sometimes, the smart wearable device is only an assist device associated with the smartphone). In this case, being offline has little real-time impact on the smart wearable device. Based on such consideration, to improve a risk that the smart wearable device is attacked online in the foregoing direct interaction mode, one or more embodiments of this specification provide a schematic flowchart of an active control solution for an online state, referring to FIG. 7.

The procedure in FIG. 7 includes the following steps S702 to S704.

S702: Control, before the writing, through direct interaction between the main control chip and an NFC chip, the payer code into the NFC chip, the smart wearable device to automatically switch from an online state to the offline state.

Writing the payer code in the offline state helps to suppress a risk outside the main control chip. In this case, even if the NFC chip is not reliable enough, the security of the payment application running on the main control chip can still be ensured well.

In particular, step S702 may be performed if the payer code is generated and written in real time. However, if the payer code is pre-written, when preparation for payment starts, for example, when the user operates a predetermined gesture or shortcut key, the smart wearable device may be controlled to automatically switch from the online state to the offline state.

S704: Control, after the reading the payment result to the main control chip through direct interaction between the main control chip and the NFC chip, the smart wearable device to automatically switch from the offline state back to the online state.

In an actual application, because an entire tap-to-pay execution process is very short, the switching between the online state and the offline state is almost perception-free for the user. Therefore, user experience can be ensured.

As mentioned above, for the payment triggering manner, the solution of this application further optimizes the manner, that is, the user causes the smart wearable device to approach the cash register, and does not need to perform another active operation, and accidental payment can be avoided. Detailed description is provided below. Referring to FIG. 8, FIG. 8 is a schematic flowchart of a segmented payment solution based on user payment willingness detection according to one or more embodiments of this specification.

The procedure in FIG. 8 includes the following steps S802 to S808.

S802: Write a payment preparation code corresponding to the payer code and/or the payer code into the NFC chip through the direct interaction between the main control chip and the NFC chip, to enable the cash register to read the payment preparation code in the NFC chip after the smart wearable device approaches the cash register and initiate payment to the server of the payment application according to the payment preparation code, and enable the server to perform a part of a payment processing procedure in response to the payment preparation code.

Time moments at which the payer code and the payment preparation code are written may be flexible, which can ensure at least that before a specific code needs to be read in these steps, the code is written.

In one or more embodiments of this specification, there are at least two optional control means for controlling whether the payer code and the payment preparation code can be read. For example, only the payment preparation code may be written first, and subsequently, the payer code is waited to be written opportunely (for example, after it is determined that the user has a payment willingness), so that only the payment preparation code but not the payer code can be read in a previous period of time. For another example, the payer code and the payment preparation code may both be written. However, respective access rights of the payer code and the payment preparation code are controlled. The access right for the payer code is opportunely released, and the payer code can be read only after the access right is released.

Compared with the payer code, the payment preparation code at least lacks a part of data required for completely performing the payment processing procedure. However, by using the payment preparation code, it is enough to complete a part or even all of the payment processing procedure first. In this case, it is not determined whether the payment triggered at this time indeed meets the willingness of the user. If the payment triggered at this time meets the willingness of the user, the part of the payment processing procedure can have a practical effect, avoiding a case that additional detection or check delays execution of the payment processing procedure.

S804: Detect an approaching mode in which the smart wearable device approaches the cash register, specifically, detect whether the smart wearable device's approaching the cash register times out, or whether a relative posture between the smart wearable device and the cash register during the approach does not belong to a predetermined normal posture.

In one or more embodiments of this specification, if the user has a payment willingness, the user only briefly performs a tap-to-pay operation, and does not cause the smart wearable device to approach the cash register for a long time. Based on such a thought, if the smart wearable device's approaching the cash register times out, it may indicate that the current user does not have a payment willingness, and accidental triggering is caused only because the current user accidentally stays excessively close to the cash register.

For detection of a relative posture, if the user has a payment willingness, a tap-to-pay operation performed by the user and the smart watch worn on a hand are used as an example, and relative postures and change conditions thereof (which may be considered as normal postures) of the smart watch and the cash register are usually generated in such explicit processes as raising the hand, stretching out the hand, and briefly staying close to the cash register. However, if the user has no payment willingness, relative postures have a large difference and belong to abnormal postures. Detecting whether there is such a difference currently can help to determine whether the user has a payment willingness.

Similarly, in addition to the two examples, more approaching modes may be further defined. For example, an approaching mode is defined only based on detecting a motion state of the smart wearable device.

S806: In response to the smart wearable device's approaching the cash register times out, or the relative posture not belonging to the predetermined normal posture, the approaching mode reflects that the current user of the smart wearable device does not have a payment willingness; otherwise, the approaching mode reflects that the current user of the smart wearable device has a payment willingness.

The determining result is obtained according to only the detection result of the approaching mode as an example. Actually, more conditions may be further combined to comprehensively perform more accurate determining.

S808: In response to the approaching mode reflecting that a current user of the smart wearable device has a payment willingness, enable the cash register to read the payer code in the NFC chip, to enable the server to perform a remaining part of the payment processing procedure in response to the payer code provided by the cash register.

The remaining part of the payment processing procedure may include a few key steps, for example, finally submitting a deduction database update operation.

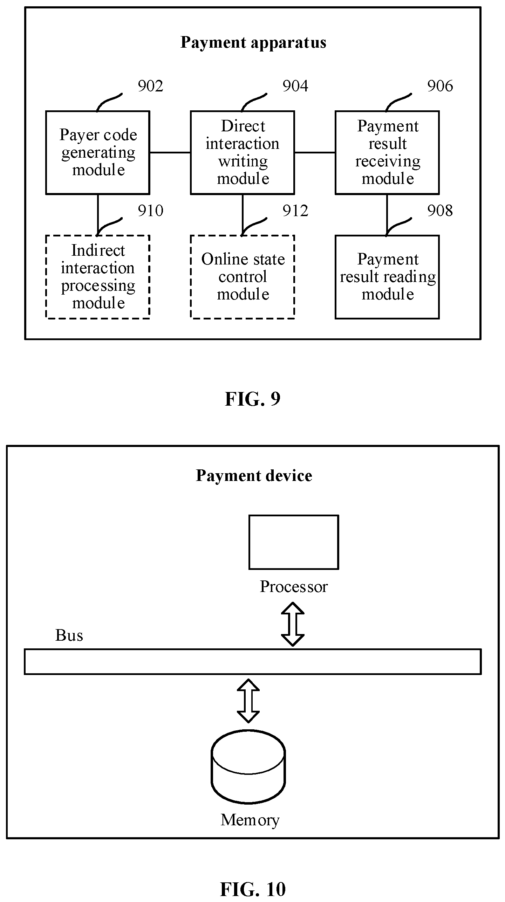

Based on the same thought, one or more embodiments of this specification further provide an apparatus and a device that correspond to the foregoing method, as shown in FIG. 9 and FIG. 10. The apparatus and the device can correspondingly perform the foregoing method and related optional solutions.

FIG. 9 is a schematic structural diagram of a payment apparatus according to one or more embodiments of this specification. The payment apparatus is applied to a smart wearable device, and the apparatus includes the following modules:
a payer code generating module 902, configured to generate a payer code through a client of a payment application running in a main control chip, where the payment application is a predetermined official application or official partner application of the smart wearable device;
a direct interaction writing module 904, configured to write, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
a payment result receiving module 906, configured to receive a payment result written into the NFC chip by the cash register after processing of the payment is completed; and
a payment result reading module 908, configured to read the payment result to the main control chip through the direct interaction between the main control chip and the NFC chip, to enable the smart wearable device to obtain the payment result.

Optionally, the NFC chip includes an NFC controller and a security module connected to each other.

Optionally, the apparatus further includes an indirect interaction processing module 910.

The indirect interaction processing module 910 is configured to: determine whether the security module has an assist applet, in response to the direct interaction does being unsuccessful, where the assist applet is an applet of the payment application or an applet of another payment assist application; and
call, in response to the security module having the assist applet, the assist applet by using the main control chip, to indirectly interact with the NFC chip.

Optionally, before the calling, in response to the security module having the assist applet, the assist applet by using the main control chip, to indirectly interact with the NFC chip, the indirect interaction processing module 910 is configured to: obtain the assist applet delivered by a trusted service manager to the security module, where the assist applet is provided by a corresponding server to the trusted service manager; and
obtain an access key from the corresponding server, where the access key is used by the main control chip to call the assist applet, and the access key is returned by the trusted service manager to the corresponding server after obtaining the assist applet.

Optionally, the payment result reading module 908 is configured to read, in response to the smart wearable device being in an offline state, the payment result to the main control chip through the direct interaction between the main control chip and the NFC chip, to enable the smart wearable device to obtain the payment result offline.

Optionally, the apparatus further includes an online state control module 912.

Before the writing, through direct interaction between the main control chip and an NFC chip, the online state control module 912 is configured to: control the payer code into the NFC chip, the smart wearable device to automatically switch from an online state to the offline state; and
after the reading the payment result to the main control chip through the direct interaction between the main control chip and the NFC chip, the online state control module 912 is configured to: control the smart wearable device to automatically switch from the offline state back to the online state.

Optionally, the direct interaction writing module 904 is configured to: write a payment preparation code corresponding to the payer code and/or the payer code into the NFC chip through the direct interaction between the main control chip and the NFC chip, to enable the cash register to read the payment preparation code in the NFC chip after the smart wearable device approaches the cash register and initiate payment to the server of the payment application according to the payment preparation code, and enable the server to perform a part of a payment processing procedure in response to the payment preparation code; and
detect an approaching mode in which the smart wearable device approaches the cash register, and in response to the approaching mode reflecting that a current user of the smart wearable device has a payment willingness, enable the cash register to read the payer code in the NFC chip, to enable the server to perform a remaining part of the payment processing procedure in response to the payer code provided by the cash register.

Optionally, the direct interaction writing module 904 is configured to: detect whether the smart wearable device's approaching the cash register times out, or whether a relative posture between the smart wearable device and the cash register during the approach does not belong to a predetermined normal posture, where
in response to the smart wearable device's approaching the cash register times out, or the relative posture not belonging to the predetermined normal posture, the approaching mode reflects that the current user of the smart wearable device does not have the payment willingness.

Optionally, the payer code generating module 902 is configured to: generate a payer code having a specified validity period; and
regenerate, after the writing the payer code into the NFC chip, a payer code that does not expire, in response to determining that the validity period of the payer code has expired, and the direct interaction writing module 904 is configured to write the payer code that does not expire into the NFC chip through the direct interaction between the main control chip and the NFC chip, for the payment.

Optionally, the smart wearable device includes a smart watch that does not have a camera supporting a code scanning function.

FIG. 10 is a schematic structural diagram of a payment device according to one or more embodiments of this specification. The payment device is applied to a smart wearable device, and the device includes:
at least one processor; and
a memory communicatively connected with the at least one processor, where
the memory stores instructions executable by the at least one processor, and the instructions are executed by the at least one processor, to enable the at least one processor to perform:
   generating a payer code through a client of a payment application running in a main control chip, where the payment application is a predetermined official application or official partner application of the smart wearable device;
   writing, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
   receiving a payment result written into the NFC chip by the cash register after processing of the payment is completed; and
   reading the payment result to the main control chip through the direct interaction between the main control chip and the NFC chip, to enable the smart wearable device to obtain the payment result.

Based on the same thought, one or more embodiments of this specification further provide a non-volatile computer storage medium, applied to a smart wearable device, where the medium stores computer-executable instructions, and the computer-executable instructions are configured to perform:
generating a payer code through a client of a payment application running in a main control chip, where the payment application is a predetermined official application or official partner application of the smart wearable device;
writing, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
receiving a payment result written into the NFC chip by the cash register after processing of the payment is completed; and
reading the payment result to the main control chip through the direct interaction between the main control chip and the NFC chip, to enable the smart wearable device to obtain the payment result.

In the 1990s, improvements to a technology can be clearly divided into hardware improvements (for example, improvements to circuit structures such as diodes, transistors, and switches) or software improvements (improvements to method procedures). However, with the development of technology, at present, improvements to many method procedures can be considered as direct improvements to hardware circuit structures. Designers almost all program an improved method procedure to a hardware circuit, to obtain a corresponding hardware circuit structure. Therefore, it does not mean that the improvement to a method procedure cannot be achieved using hardware entity modules. For example, a programmable logic device (PLD) (such as a field programmable gate array (FPGA), is such an integrated circuit whose logic function is determined by a user programming the device. The designers perform voluntary programming to "integrate" a digital system into a single PLD without requiring a chip manufacturer to design and prepare a dedicated integrated circuit chip. In addition, instead of making an integrated circuit chip manually, the programming is mostly implemented by using "logic compiler" software, which is similar to the software compiler used to write programs. Original code before compiling is also written in a specific programming language, which is referred to as hardware description language (HDL). There are many types of HDLs, such as advanced boolean expression language (ABEL), Altera hardware description language (AHDL), Confluence, Cornell University programming language (CUPL), HDCal, Java hardware description language (JHDL), Lava, Lola, MyHDL, PALASM, and Ruby hardware description language (RHDL). Currently, very-high-speed integrated circuit hardware description language (VHDL) and Verilog are most commonly used. A person skilled in the art should also be aware that it is easy to obtain a hardware circuit that implements the logic method procedures by simply performing some logic programming on the method procedures by using the foregoing hardware description languages and performing programming into an integrated circuit.

The controller can be implemented in any suitable manner. For example, the controller can use the form of, for example, a microprocessor or processor and a computer-readable medium storing computer-readable program code (for example, software or firmware) executable by the processor, a logic gate, a switch, an application-specific integrated circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. The memory controller can also be implemented as part of the memory control logic. A person skilled in the art is also aware that in addition to implementing the controller by using pure computer-readable program code, method steps may be logically programmed to enable the controller to implement a same function in a form of a logic gate, a switch, an application-specific integrated circuit, a programmable logic controller, an embedded microcontroller, or the like. Therefore, the controller may be considered as a hardware component, and an apparatus for implementing various functions included in the controller may also be considered as a structure in the hardware component. Alternatively, the apparatus for implementing various functions may be even considered as a software module for implementing the method and a structure in a hardware component.

The system, the apparatus, the module or the unit described in the foregoing embodiments may be specifically implemented by a computer chip or an entity, or implemented by a product having a specific function. A typical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or any combination of these devices.

For convenience of description, the foregoing apparatuses are described in separate units according to functions. Certainly, during implementation of this specification, the functions of the units may be implemented in the same piece of or a plurality of pieces of software and/or hardware.

A person skilled in the art should understand that the embodiments of this specification may be provided a method, a system, or a computer program product. Therefore, the embodiments of this specification may use a form of hardware only embodiments, software only embodiments, or embodiments with a combination of software and hardware. In addition, the embodiments of this specification may be in a form of a computer program product implemented in one or more computer-usable storage media (including, but not limited to, disk storage, a CD-ROM, optical storage, and the like) including computer-usable program codes.

This specification is described with reference to the flowcharts and/or block diagrams of the methods, the devices (systems), and the computer program products according to the embodiments of this specification. It should be understood that computer program instructions may be used for implementing each procedure and/or block in the flowcharts and/or block diagrams and a combination of procedures and/or blocks in the flowcharts and/or block diagrams. These computer program instructions may be provided to a general-purpose computer, a special-purpose computer, an embedded processor, or a processor of another programmable data processing device to generate a machine, so that an apparatus configured to implement functions specified in one or more procedures in the flowcharts and/or one or more blocks in the block diagrams is generated by using instructions executed by a computer or a processor of another programmable data processing device.

It should be further noted that, the terms "include", "include", or any variants thereof are intended to cover a non-exclusive inclusion. Therefore, a process, method, article, or device that includes a series of elements not only includes such elements, but also includes other elements not specified expressly, or may include inherent elements of the process, method, article, or device. Unless otherwise specified, an element limited by "including a/an..." does not exclude that other same elements exist in the process, method, article, or device including the element.

This specification may be described in the general context of computer-executable instructions executed by a computer, for example, program modules. Generally, the program module includes a routine, a program, an object, a component, a data structure, or the like that executes a specific task or implements a specific abstract data type. This specification may also be implemented in a distributed computing environment in which tasks are performed by remote processing devices connected by using a communication network. In a distributed computing environment, the program module may be located in local and remote computer storage media including storage devices.

Embodiments in this specification are all described in a progressive manner, for same or similar parts in embodiments, reference may be made to these embodiments, and each embodiment focuses on a difference from other embodiments. Especially, an apparatus embodiment, a device embodiment, a non-volatile computer storage medium embodiment are substantially similar to a method embodiment, and therefore are briefly described. Related parts can be obtained with reference to some descriptions of the method embodiment.

Embodiments of this specification are described above. Other embodiments fall within a scope of appended claims. In some cases, actions or steps recorded in the claims may be performed in sequences different from those in embodiments and an expected result may still be achieved. In addition, the processes depicted in the accompanying drawings do not necessarily require the particular order shown or sequential order to achieve the desired results. In some implementations, multitasking and parallel processing may also be feasible or beneficial.

The above descriptions are merely one or more embodiments of this specification and are not used to limit this specification. For a person skilled in the art, various modifications and changes may be made to the one or more of embodiments of this specification. Any modification, equivalent replacement, or improvement made within the spirit and principle of the one or more embodiments of this specification fall within the scope of the claims of this specification.

## Claims

1. A payment method, applied to a smart wearable device, the method comprising:
generating a payer code through a client of a payment application running in a main control chip, wherein the payment application is a predetermined official application or official partner application of the smart wearable device;
writing, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
receiving a payment result written into the NFC chip by the cash register after processing of the payment is completed; and
reading the payment result to the main control chip through the direct interaction between the main control chip and the NFC chip, to enable the smart wearable device to obtain the payment result.

2. The method according to claim 1, wherein the NFC chip comprises an NFC controller and a security module connected to each other.

3. The method according to claim 2, further comprising:
determining whether the security module has an assist applet, in response to the direct interaction being unsuccessful, wherein the assist applet is an applet of the payment application or an applet of another payment assist application; and
calling, in response to the security module having the assist applet, the assist applet by using the main control chip, to indirectly interact with the NFC chip.

4. The method according to claim 3, wherein before the calling, in response to the security module having the assist applet, the assist applet by using the main control chip, to indirectly interact with the NFC chip, the method further comprises:
obtaining the assist applet delivered by a trusted service manager to the security module, wherein the assist applet is provided by a corresponding server to the trusted service manager; and
obtaining an access key from the corresponding server, wherein the access key is used by the main control chip to call the assist applet, and the access key is returned by the trusted service manager to the corresponding server after obtaining the assist applet.

5. The method according to claim 1, wherein the reading the payment result to the main control chip through the direct interaction between the main control chip and the NFC chip specifically comprises:
reading, in response to the smart wearable device being in an offline state, the payment result to the main control chip through the direct interaction between the main control chip and the NFC chip, to enable the smart wearable device to obtain the payment result offline.

6. The method according to claim 5, wherein before the writing, through direct interaction between the main control chip and an NFC chip, the payer code into the NFC chip, the method further comprises:
controlling the smart wearable device to automatically switch from an online state to the offline state; and
after the reading the payment result to the main control chip through the direct interaction between the main control chip and the NFC chip, the method further comprises:
controlling the smart wearable device to automatically switch from the offline state back to the online state.

7. The method according to claim 1, wherein the writing, through direct interaction between the main control chip and an NFC chip, the payer code into the NFC chip specifically comprises:
writing a payment preparation code corresponding to the payer code and/or the payer code into the NFC chip through the direct interaction between the main control chip and the NFC chip, to enable the cash register to read the payment preparation code in the NFC chip after the smart wearable device approaches the cash register and initiate payment to the server of the payment application according to the payment preparation code, and enable the server to perform a part of a payment processing procedure in response to the payment preparation code; and
detecting an approaching mode in which the smart wearable device approaches the cash register, and in response to the approaching mode reflecting that a current user of the smart wearable device has a payment willingness, enabling the cash register to read the payer code in the NFC chip, to enable the server to perform a remaining part of the payment processing procedure in response to the payer code provided by the cash register.

8. The method according to claim 7, wherein the detecting an approaching mode in which the smart wearable device approaches the cash register specifically comprises:
detecting whether the smart wearable device's approaching the cash register times out, or whether a relative posture between the smart wearable device and the cash register during the approach does not belong to a predetermined normal posture, wherein
in response to the smart wearable device's approaching the cash register times out, or the relative posture not belonging to the predetermined normal posture, the approaching mode reflects that the current user of the smart wearable device does not have the payment willingness.

9. The method according to claim 1, wherein the generating a payer code specifically comprises:
generating a payer code having a specified validity period; and
after the writing the payer code into the NFC chip, the method further comprises:
regenerating a payer code that does not expire, in response to determining that the validity period of the payer code has expired, and writing the payer code that does not expire into the NFC chip through the direct interaction between the main control chip and the NFC chip, for the payment.

10. The method according to any one of claims 1 to 9, wherein the smart wearable device comprises a smart watch that does not have a camera supporting a code scanning function.

11. A payment apparatus, applied to a smart wearable device, the apparatus comprising:
a payer code generating module, configured to generate a payer code through a client of a payment application running in a main control chip, wherein the payment application is a predetermined official application or official partner application of the smart wearable device;
a direct interaction writing module, configured to write, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
a payment result receiving module, configured to receive a payment result written into the NFC chip by the cash register after processing of the payment is completed; and
a payment result reading module, configured to read the payment result to the main control chip through the direct interaction between the main control chip and the NFC chip, to enable the smart wearable device to obtain the payment result.

12. The apparatus according to claim 11, wherein the NFC chip comprises an NFC controller and a security module connected to each other.

13. The apparatus according to claim 12, further comprising:
an indirect interaction processing module, configured to: determine whether the security module has an assist applet, in response to the direct interaction being unsuccessful, wherein the assist applet is an applet of the payment application or an applet of another payment assist application; and
call, in response to the security module having the assist applet, the assist applet by using the main control chip, to indirectly interact with the NFC chip.

14. The apparatus according to claim 13, wherein before the calling, in response to the security module having the assist applet, the assist applet by using the main control chip, to indirectly interact with the NFC chip, the indirect interaction processing module is configured to: obtain the assist applet delivered by a trusted service manager to the security module, wherein the assist applet is provided by a corresponding server to the trusted service manager; and
obtain an access key from the corresponding server, wherein the access key is used by the main control chip to call the assist applet, and the access key is returned by the trusted service manager to the corresponding server after obtaining the assist applet.

15. The apparatus according to claim 11, wherein the payment result reading module is configured to read, in response to the smart wearable device being in an offline state, the payment result to the main control chip through the direct interaction between the main control chip and the NFC chip, to enable the smart wearable device to obtain the payment result offline.

16. The apparatus according to claim 15, further comprising:
an online state control module,
wherein before the writing, through direct interaction between the main control chip and an NFC chip, the payer code into the NFC chip, the online state control module is configured to: control the smart wearable device to automatically switch from an online state to the offline state; and
after the reading the payment result to the main control chip through the direct interaction between the main control chip and the NFC chip, the online state control module is configured to: control the smart wearable device to automatically switch from the offline state back to the online state.

17. The apparatus according to claim 11, wherein the direct interaction writing module is configured to: write a payment preparation code corresponding to the payer code and/or the payer code into the NFC chip through the direct interaction between the main control chip and the NFC chip, to enable the cash register to read the payment preparation code in the NFC chip after the smart wearable device approaches the cash register and initiate payment to the server of the payment application according to the payment preparation code, and enable the server to perform a part of a payment processing procedure in response to the payment preparation code; and
detect an approaching mode in which the smart wearable device approaches the cash register, and in response to the approaching mode reflecting that a current user of the smart wearable device has a payment willingness, enable the cash register to read the payer code in the NFC chip, to enable the server to perform a remaining part of the payment processing procedure in response to the payer code provided by the cash register.

18. The apparatus according to claim 17, wherein the direct interaction writing module is configured to: detect whether the smart wearable device's approaching the cash register times out, or whether a relative posture between the smart wearable device and the cash register during the approach does not belong to a predetermined normal posture, wherein
in response to the smart wearable device's approaching the cash register times out, or the relative posture not belonging to the predetermined normal posture, the approaching mode reflects that the current user of the smart wearable device does not have the payment willingness.

19. The apparatus according to claim 11, wherein the payer code generating module is configured to: generate a payer code having a specified validity period; and
regenerate, after the writing the payer code into the NFC chip, a payer code that does not expire, in response to determining that the validity period of the payer code has expired, and the direct interaction writing module is configured to write the payer code that does not expire into the NFC chip through the direct interaction between the main control chip and the NFC chip, for the payment.

20. The apparatus according to any one of claims 11 to 19, wherein the smart wearable device comprises a smart watch that does not have a camera supporting a code scanning function.

21. A payment device, applied to a smart wearable device, the device comprising:
at least one processor; and
a memory communicatively connected with the at least one processor, wherein
the memory stores instructions executable by the at least one processor, and the instructions are executed by the at least one processor, to enable the at least one processor to perform:
generating a payer code through a client of a payment application running in a main control chip, wherein the payment application is a predetermined official application or official partner application of the smart wearable device;
writing, through direct interaction between the main control chip and an NFC chip, the payer code into the NFC chip, to enable a cash register to read the payer code in the NFC chip after the smart wearable device approaches the cash register and initiate payment to a server of the payment application according to the payer code;
receiving a payment result written into the NFC chip by the cash register after processing of the payment is completed; and
reading the payment result to the main control chip through the direct interaction between the main control chip and the NFC chip, to enable the smart wearable device to obtain the payment result.
